# EUROPEAN PATENT APPLICATION

(11) **EP 3 499 874 A1**
(43) Date of publication of application: **19.06.2019**
(21) Application number: 19154014.5
(22) Date of filing: 30.01.2014
(51) Int. Cl.: H04N 5/445, G06F 9/44, G06F 3/0482, H04N 21/431, H04N 21/45, H04N 21/47, H04N 21/485, H04N 21/643, H04N 21/426, H04N 21/81

(54) **NETWORKED DISPLAY WITH LOCATION DEPENDENT MENUS**

(30) Priority: 31.01.2013 US 201361758911 P; 08.03.2013 KR 20130025202
(62) Divisional of application: 14153259.8
(71) Applicant: Samsung Electronics Co., Ltd., Gyeonggi-do 16677 (KR)
(72) Inventor: OH, Sung-bo, Gyeonggi-do (KR)
(74) Representative: Appleyard Lees IP LLP

(57) **Abstract**

A display apparatus (100) is provided. The display apparatus includes a communicator (110) which is configured to perform communication with a network, a storage unit (120) which is configured to store a program that is executable in the display apparatus, a display unit (130) which is configured to display menus to execute the program, and a controller (140) which is configured to control the display unit to configure and display the menus differently according to one from among a network address which is allocated to the display apparatus for network communication and location information received through network communication.

## Description

### CROSS-REFERENCE TO RELATED APPLICATIONS

This application claims priority from Korean Patent Application No. 10-2013-0025202, filed in the Korean Intellectual Property Office on March 8, 2013, and U.S. Provisional Application No. 61/758,911, filed in the USPTO on January 31, 2013, the disclosures of which are incorporated herein by reference in their entirety.

### BACKGROUND

### 1. Field

Aspects of the exemplary embodiments relate to a display apparatus and a menu displaying method thereof, and more particularly, though no exclusively to a display apparatus which displays a menu to execute basic programs installed in the display apparatus and a menu displaying method thereof.

### 2. Description of the Related Art

With the development of electronic technology, users may be provided with various services from various kinds of display apparatuses such as a television, a smart phone, and a tablet, and so on. Herein, examples of the various services include connecting to the Internet, reproducing contents, searching contents, etc.

Meanwhile, the types of services desired by users vary depending on countries and regions, and thus manufacturers of the prior art display apparatuses have to manufacture a display apparatus to provide different services according to countries and regions where the users are located.

Accordingly, manufacturers should configure display apparatuses differently according to countries and regions where the display apparatuses are sold, which causes burden on the manufacturers in terms of costs and manufacturing time.

### SUMMARY

An aspect of the exemplary embodiments of the invention relates to a display apparatus capable of providing basic programs installed in the display apparatus differently according to a network address, and a menu display method thereof.

A display apparatus according to an exemplary embodiment of the invention includes a communicator (such as e.g. a communication unit) which is configured to perform communication with a network (e.g. a communications network), a storage means (such as e.g. a storage unit) which is configured to store a program that is executable in the display apparatus, a display unit which is configured to display menus to execute the program, and a controller (e.g. a control unit) which is configured to control the display unit to configure and display the menus differently according to one from among a network address which is allocated to the display apparatus for network communication and location information received through network communication.

The program may be an application program necessary to provide a basic function of the display apparatus.

The storage means may store information regarding the menus which are displayed according to a location of the display apparatus.

The controller may control to determine a location of the display apparatus using the network address and display a menu corresponding to the determined location of the display apparatus using pre-stored information.

The menu may include menu items to execute programs corresponding to the location of the display apparatus from among programs pre-stored in the storage.

The network address may be an Internet Protocol (IP) address.

A menu displaying method in a display apparatus which provides menus to execute a program installed in the display apparatus according to an exemplary embodiment of the invention may include configuring the menus differently according to one from among a network address which is allocated to the display apparatus for network communication and location information received through network communication and displaying the menus which are configured differently.

The program may be an application program necessary to provide a function of the display apparatus.

The storage means (e.g. storage unit) may store information regarding menus which are displayed according to a location of the display apparatus.

The configuring may include determining a location of the display apparatus using the network address and configuring the menus to correspond to the determined location of the display apparatus using pre-stored information.

A menu may include menu items to execute programs corresponding to the location of the display apparatus from among programs pre-stored in a storage unit.

The network address may be an Internet Protocol (IP) address.

A display apparatus according to an exemplary embodiment of the invention may include: a communicator (e.g. a communication unit) which is configured to perform communication with a network; a display unit which is configured to display menus; and a controller (e.g. a control unit) which is configured to control the display unit to display the menus differently according to one from among a network address and location information.

The display apparatus may further comprise a storage which is configured to store information regarding the menus which are displayed according to a location of the display apparatus.

The controller may control to determine the location of the display apparatus using the network address and display a menu corresponding to the determined location of the display apparatus using pre-stored information.

The menu includes menu items to execute programs corresponding to the location of the display apparatus from among programs pre-stored in the storage.

The network address may be an Internet Protocol (IP) address.

A menu displaying method may be provided according to an exemplary embodiment of the invention in a display apparatus which provides menus, the method comprising: configuring the menus differently according to one from among a network address and location information; and displaying the menus which are configured differently.

The method may further comprise storing information regarding menus which are displayed according to a location of the display apparatus.

The configuring may comprise determining a location of the display apparatus using the network address and configuring the menus to correspond to the determined location of the display apparatus using pre-stored information.

The menu may include menu items to execute programs corresponding to the location of the display apparatus from among programs pre-stored in a storage unit.

The network address may be an Internet Protocol (IP) address.

The menus may comprise menu items, and the menu items may be configured to have different sizes, to be located in different locations, or to have different sizes in different locations according to the one from among the network address and the location information.

A display apparatus may be provided according to an exemplary embodiment of the invention, the display apparatus comprising: a display unit which is configured to display a plurality of files; and a controller (e.g. a control unit) which is configured to control the display unit to display at least one file from among the plurality of files according to one from among a network address and location information, wherein a type of the at least one file is different from types of other files among the plurality of files.

The plurality of files may be stored in a removable storage means.

A menu displaying method may be provided according to an exemplary embodiment of the invention in a display apparatus which displays files. The method comprises: storing a plurality of files; and displaying at least one from among the plurality of files according to one from among a network address and location information, wherein a type of the at least one file is different from types of other files among the plurality of files.

According to various exemplary embodiments, different basic functions may be provided according to a location of a display apparatus. Thus, a user may be provided with a desired service, while manufacturer may save time and costs for manufacturing a display apparatus.

### BRIEF DESCRIPTION OF THE DRAWINGS

The above and/or other aspects of the present inventive concept will be more apparent by describing certain exemplary embodiments of the present inventive concept with reference to the accompanying drawings, in which:
FIG. 1 is a block diagram provided to explain a configuration of a display apparatus according to an exemplary embodiment;
FIGS. 2 to 6 are views provided to explain an operation of a display apparatus according to an exemplary embodiment;
FIG. 7 is a block diagram provided to explain a configuration of a display apparatus according to an exemplary embodiment;
FIG. 8 is a flowchart provided to explain a method for displaying different menus according to a location of a display apparatus according to an exemplary embodiment;
FIG. 9 is a flowchart provided to explain a method for displaying menus having different layouts according to a location of a display apparatus according to an exemplary embodiment;
FIGS. 10 to 12 are views provided to explain an operation of a display apparatus according to an exemplary embodiment; and
FIG. 13 is a flowchart provided to explain a menu displaying method according to an exemplary embodiment.

### DETAILED DESCRIPTION

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

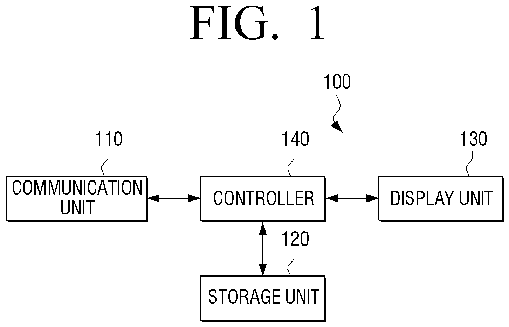

FIG. 1 is a block diagram provided to explain a configuration of a display apparatus according to an exemplary embodiment. Referring to FIG. 1, a display apparatus 100 comprises a communication unit 110 ("communicator"), a storage unit 120 ("storage"), a display unit 130, and a controller 140. Herein, the display apparatus 100 may be realized as various electronic apparatuses such as a television, a smart phone, a tablet, a desktop personal computer (PC), a notebook PC, and so on.

The communication unit 110 communicates with a network (not shown). Specifically, the communication unit 110 may perform communication with various external apparatuses (for example, another apparatuses or a server) which are connected to a network using an allocated network address.

Herein, the network address may be an Internet Protocol (IP) address. That is, the communication unit 110 may perform communication with other external apparatuses (not shown) which are connected to an Internet network using an IP address.

Meanwhile, the communication unit 110 may perform network communication using various communication methods.

Specifically, the communication unit 110 may perform network communication using various communication methods such as wired/wireless Local Area Network (LAN), WiFi, WAN, Ethernet, Bluetooth, Zigbee, Universal Serial Bus (USB), IEEE 1394, and so on. To do so, the communication unit 110 may comprise various communication modules to perform network communication according to each communication method. For example, the communication unit 110 may comprise a wired LAN card (not shown) when performing communication according to a wired LAN method, and may comprise a WiFi communication chip (not shown) when performing communication according to a WiFi method.

The storage unit 120 stores various data and an operating system (OS) to drive and control the display apparatus 100.

In addition, the storage unit 120 stores basic programs which are executable in the display apparatus 100. Herein, the basic programs may be application programs which are required to provide basic functions (or basic services) of the display apparatus 100.

Specifically, the basic programs are application programs which are installed by a manufacturer when the display apparatus 100 is manufactured for the first time, and represent application programs which cannot be deleted arbitrarily by a user of the display apparatus 100.

For example, if a manufacturer of the display apparatus 100 wishes to provide the function of searching contents, the function of reproducing contents, the function of searching various application programs installed in the display apparatus 100, the function of connecting to Internet, and the function of setting the display apparatus 100 using basic programs, the storage unit 120 may store basic programs to provide the corresponding basic functions.

In addition, the storage unit 120 may store download programs which are executable in the display apparatus 100. Herein, the download programs may be application programs which are required for the display apparatus 100 to provide additional functions (or additional services) in addition to the basic functions.

Specifically, the download programs represent application programs which can be installed in or deleted from the display apparatus 100 arbitrarily by a user, unlike the basic programs.

For example, a user may download additional functions such as the function of playing a game, the function of chatting, etc. from an external apparatus (not shown) and install them in the display apparatus 100, and the storage unit 120 may store download programs which may provide the corresponding additional functions.

To do so, the storage unit 120 may be realized as a storage medium such as a non-volatile memory (for example, a flash memory and an Electrically Erasable ROM (EEROM)), a hard disk, and so on.

Meanwhile, the storage unit 120 may store basic programs and download programs in separate areas. Specifically, the storage unit 120 may divide a storage area of a storage medium into a plurality of storage areas and store basic programs and download programs in different storage areas. For example, if the storage unit 120 is realized as a flash memory, basic programs may be stored in the first storage area of the flash memory, and download programs may be stored in the second storage area of the flash memory. In this case, the storage area for the basic programs may be a storage area which cannot be accessed by a user arbitrarily, but the storage area for the download programs may be a storage area accessible by a user. That is, a user may not arbitrarily delete the basic programs stored in the storage area for the basic programs, but may delete the download programs stored in the storage area for the download programs.

Meanwhile, various data and an operating system to drive and control the display apparatus 100 may also be stored in the storage area for the basic programs, and they may be referred to as firmware.

However, this is only an example, and the storage unit 120 may store basic programs and download programs in different storage media. That is, if the storage unit 120 is realized as a plurality of flash memories, the basic programs may be stored in the first flash memory, and the download programs may be stored in the second flash memory.

In addition, the storage unit 120 may store information regarding menus according to a location of the display apparatus 100. Herein, the menus may include menu items to execute the basic programs which may provide basic functions. That is, the storage unit 120 may store information regarding the basic functions which are provided to a user according to a location of the display apparatus 100 from among the basic functions.

Further, the storage unit 120 may store menu graphic data which is displayed according to a location of the display apparatus 100. Herein, the menu graphic data may include different menu items according to a location of the display apparatus 100, and the menu items may be menu items to execute the basic programs.

The display unit 130 displays various screens. Specifically, the display unit 130 may display menus to execute basic programs. Herein, the menu may include menu items to execute basic programs which may provide the basic functions of the display apparatus 100.

To do so, the display unit 130 may be realized as a Liquid Crystal Display (LCD), an Organic Light Emitting Display (OLED), a Plasma Display Panel (PDP), and so on.

The controller 140 controls overall functions of the display apparatus 100. The controller 140 may include a Central Processing Unit (CPU), and a Random Access Memory (RAM) for operations of the display apparatus 100.

In particular, the controller 140 may control the display unit 130 to configure menus differently according to a network address based on the network address which is used for network communication and display them. In this case, the controller 140 may control the display unit 130 to configure menus differently according to the network address which is allocated to the display apparatus 100 for network communication or location information received through network communication.

Specifically, the controller 140 may determine basic functions provided according to a location of the display apparatus 100 from among basic functions which can be provided by the display apparatus 100 and display menus to provide the basic programs which are determined according to the location. Herein, the menus may include menu items to execute the basic programs providing the basic functions which are determined according to a location of the display apparatus 100.

Herein, the basic functions which can be provided by the display apparatus 100 are all of part of the basic functions which can be provided by the display apparatus 100 and may vary depending on the properties (for example, a version) of firmware installed in the display apparatus 100.

To do so, the controller 140 may determine a location of the display apparatus 100 using a network address. The controller 140 may determine a location of the display unit 100 using the network address allocated to the display apparatus 100 for network communication.

Herein, the network address may be an IP address. Specifically, in the case of an IP address, the IP address is allocated differently depending on a location (for example, countries or regions) of the display apparatus 100 which performs network communication, and thus the controller 140 may determine the countries and regions where the display apparatus 100 is located using the IP address.

To do so, the storage unit 120 may store information regarding locations which are matched with each network address. That is, the storage unit 120 may store information regarding the countries or regions where IP addresses belong to for each IP address. Accordingly, the controller 140 may determine a location of the display apparatus 100 using a network address.

However, this is only an example, and the information regarding a location which is matched with each of the network addresses may be received from an outside source. That is, location information of the display apparatus 100 may be received from an outside source through network communication. Specifically, the controller 140 may transmit the network address allocated to the display apparatus 100 to an external server (not illustrated) and receive the location (that is, location information) of the display apparatus 100 determined based on the network address.

Further, the controller 140 may control to display a menu corresponding to a location of the display apparatus 100 which is determined using pre-stored information.

As described above, the storage unit 120 may store information regarding basic functions which are provided according to a location of the display apparatus 100 from among the basic functions which can be provided by the display apparatus 100. Accordingly, the controller 140 may determine basic functions which are provided according to a location of the display apparatus 100 from among the basic functions which can be provided by the display apparatus 100. In addition, the controller 140 may configure menus to include menu items to execute each of the basic programs providing basic functions which are determined according to a location of the display apparatus 100, and display the menus.

In addition, as described above, the storage unit 120 may store menu graphic data differently according to a location of the display apparatus 100. Accordingly, the controller 140 may determine menu graphic data corresponding to a location of the display apparatus 100 from among pre-stored menu graphic data, and display a menu corresponding to the location of the display apparatus 100 using the same. In this case, the menu may include menu items to execute each of the basic programs providing basic functions corresponding to the location of the display apparatus 100.

As such, the menu may display menu items to execute each of the basic programs corresponding to a location of the display apparatus 100 from among the basic programs pre-stored in the storage unit 120.

In addition, the controller 140 may execute a basic program corresponding to a menu item which is selected on a menu. For example, the controller 140 may store a basic program corresponding to a menu item selected from the basic programs stored in the storage unit 120 in a random access memory (RAM) and execute the corresponding basic program using the same.

Meanwhile, the controller 140 may activate only a basic function which is determined according to a location of the display apparatus 100 from among the basic functions which can be provided by the display apparatus 100. For example, if the power of the display apparatus 100 is turned on, the controller 140 may perform an initial setting and drive an operating system with respect to the display apparatus 100 through firmware. In this case, the controller 140 may store a basic program providing a basic function which is determined according to a location of the display apparatus 100 in a RAM and activate only the basic function which is determined according to the location of the display apparatus 100. In addition, the controller 140 may display a menu corresponding to the location of the display apparatus 100. Accordingly, if a menu item is selected on a menu, the controller 140 may activate a basic program corresponding to the selected menu item from among the basic programs stored in the RAM.

As described above, according to various exemplary embodiments, menus providing basic functions may be displayed differently according to a location of the display apparatus 100. Therefore, a user may be provided with different basic functions according to a location of the display apparatus 100.

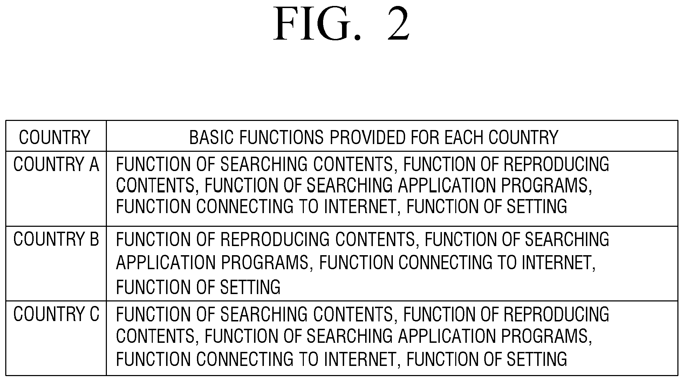

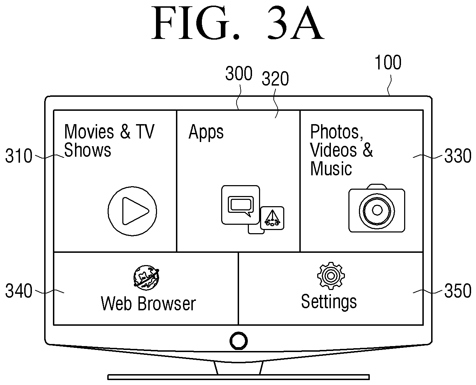

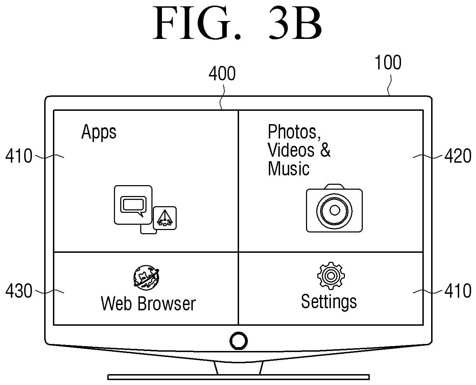

For greater details, please refer to FIGS. 2 and 3.

FIGS. 2, 3A and 3B illustrate a case where it is assumed that the display apparatus 100 is realized as a television, and the basic functions which can be provided by the display apparatus 100 are the function of searching contents, the function of reproducing contents, the function of searching various application programs, the function of connecting to Internet, and the function of setting.

For example, the storage unit 120 may store information regarding menus which are provided according to a location of the display apparatus 100 as illustrated in FIG. 2.

That is, if the location of the display apparatus 100 is country A and country C, the storage unit 120 may store information indicating that the basic functions provided in country A and country C are the function of searching contents, the function of reproducing contents, the function of searching various application programs, the function of connecting to Internet, and the function of setting; and if the location of the display apparatus 100 is country B, the basic functions provided in country B are the function of reproducing contents, the function of searching various application programs, the function of connecting to Internet, and the function of setting.

Meanwhile, in FIG. 2, the storage unit 120 stores information regarding menus according to countries, but this is only an example. For example, the storage unit 120 may store information regarding menus according regions such as states and cities.

Accordingly, the controller 140 may configure different screens according to a location of the display apparatus 100 using information stored in the storage unit 120 and display the same.

For example, as illustrated in FIG. 3A, if it is determined that the display apparatus 100 is located in country A or country C, the controller 140 may configure a menu 300 to include a menu item 310 to execute a basic program providing the function of searching contents, a menu item 320 to execute a basic program providing the function of searching various application programs, a menu item 330 to execute a basic program providing the function of reproducing contents, a menu item 340 to execute a basic program providing the function of connecting to Internet, and a menu item 350 to execute a basic program providing the function of setting, and display the same.

Meanwhile, as illustrated in FIG. 3B, if it is determined that the display apparatus 100 is located in country B, the controller 140 may configure a menu 400 to include a menu item 410 to execute a basic program providing the function of searching various application programs, a menu item 420 to execute a basic program providing the function of reproducing contents, a menu item 430 to execute a basic program providing the function of connecting to Internet, and a menu item 440 to execute a basic program providing the function of setting, and display the same.

As described above, the controller 140 may display menus providing different functions according to a location of the display apparatus 100. Therefore, users may be provided with different basic functions according to a location of the display apparatus 100.

Meanwhile, if information regarding a menu corresponding to a location of the display apparatus 100 is not pre-stored, the controller 140 may provide the basic functions which are set in the display apparatus 100 as default.

For example, if all of the basic functions which can be provided by the display apparatus 100 are set as default, the controller 140 may display menus to provide all of the basic functions which can be provided by the display apparatus 100. That is, in the above-described example with respect to FIG. 2, if it is determined that the location of the display apparatus 100 is country D, the controller 140 may display menus to provide the function of searching various application programs, the function of reproducing contents, the function of searching various application programs, the function of connecting to Internet, and the function of establishing settings.

Meanwhile, the controller 140 may configure the layouts of the menus differently according to a location of the display apparatus 100 and display the same.

To do so, the storage unit 120 may store information regarding the size, location, etc. of each menu item constituting menus according to a location of the display apparatus 100. In addition, the storage unit 120 may store menu graphic data such that menu items have different sizes, are located in different locations, or have different sizes in different locations according to a location of the display apparatus 100.

Accordingly, the controller 140 may determine a layout of a menu corresponding to a location of the display apparatus 100 and compose menus by adjusting the size, location, etc. of each menu item to correspond to the determined layout.

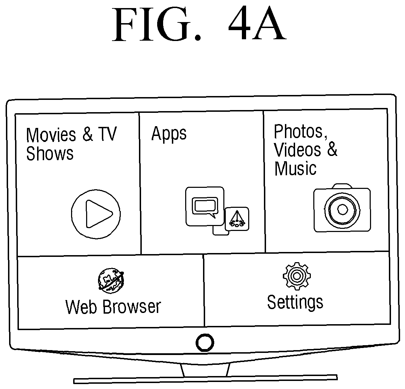

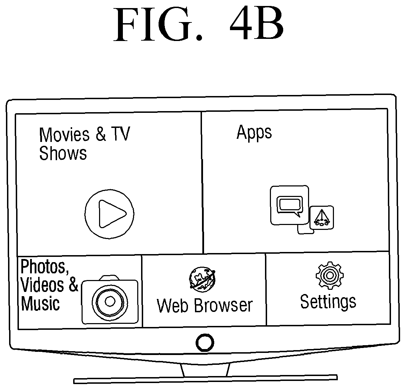

For example, as illustrated in FIGS. 4A and 4B, even when the same basic functions are provided according to a location of the display apparatus 100, the controller 140 may display the basic functions differently by adjusting at least one of the size and location of the menu items constituting the menus.

Meanwhile, in the above exemplary embodiment, at least one of the size and location of the menu items are displayed differently according to a location of the display apparatus 100, but this is only an example.

That is, the controller 140 may change the graphic shape of each menu item constituting menus according to a location of the display apparatus 100. To do so, the storage unit 120 may store information regarding the graphic shape of each menu item constituting menus according to a location of the display apparatus. In addition, the storage unit 120 may store menu graphic data consisting of menu items of different graphic shapes according to a location of the display apparatus 100.

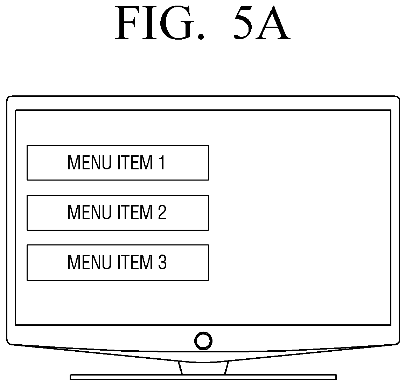

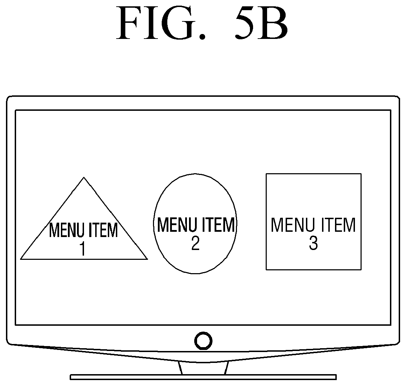

For example, as illustrated in FIG. 5A, the controller 140 may display each menu item in a rectangular shape at a specific location, while as illustrated in FIG. 5B, the controller 140 may display each menu item in triangle, circle and rectangular shapes at other locations. However, the graphic shapes of the menu items illustrated in FIGS. 5A and 5B are only examples, and the graphic shapes of menu items may vary depending on circumstances.

Meanwhile, if information regarding layouts of menus matching with a location of the display apparatus 100 is not pre-stored, the controller 140 may configure and display menus according to layouts set in the display apparatus 100 as default.

Meanwhile, in the above example, a method for providing different basic functions to users according to a location of the display apparatus 100 has been explained, but this is only an example. That is, the controller 140 may control to provide not only basic functions but also additional different functions according to a location of the display apparatus 100.

Meanwhile, the additional functions which are provided according to a location of the display apparatus 100 may be set when or after a download program for providing the additional functions is downloaded and stored in the storage unit 120. In addition, the additional functions may be set individually whenever a download program is downloaded and downloaded in the display apparatus 100.

For example, suppose that menus to execute various application programs installed in the display apparatus 100 are displayed as the function of searching application programs is executed. In this case, if all of the application programs that are searched according to the function of searching application programs are download programs, the controller 140 may display different menus according to a location of the display apparatus 100.

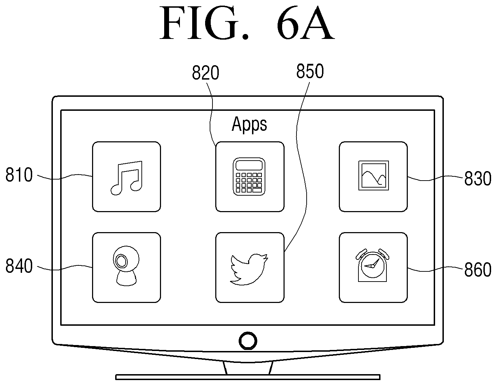

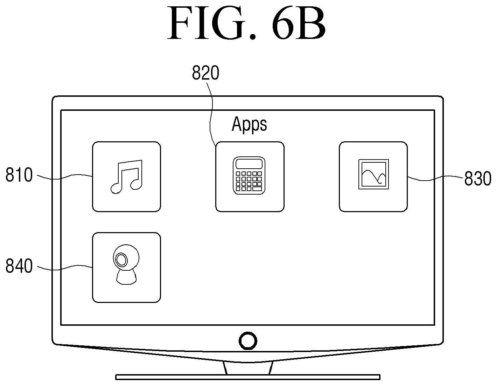

Specifically, the controller 140 may display menu items (810 to 860) to execute all of the download programs installed in the display apparatus 100 at a specific location as illustrated in FIG. 6A, and may display menu items (810 to 840) to execute some of the download programs installed in the display apparatus 100 as illustrated in FIG. 6B.

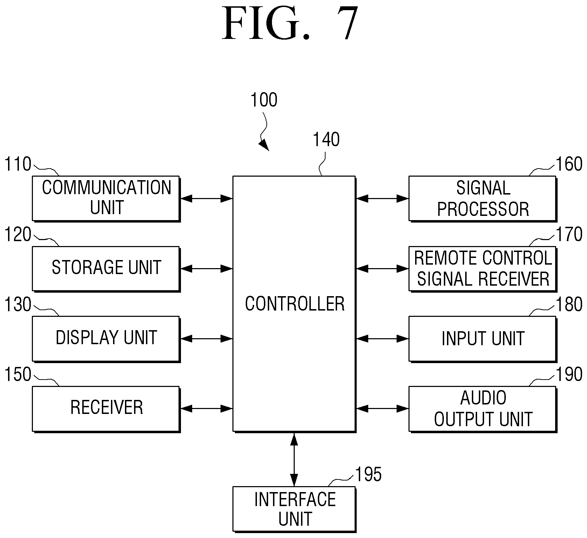

FIG. 7 is a block diagram provided to explain a configuration of a display apparatus in detail according to an exemplary embodiment. Referring to FIG. 7, the display apparatus 100 may further comprise a receiver 150, a signal processor 160, a remote control signal receiver 170, an input unit 180, and an audio output unit 190 in addition to the configurations illustrated in FIG. 1, and their operations may be controlled by the controller 140.

Meanwhile, in FIG. 7, the display apparatus 100 is realized as a television. Since the descriptions regarding the communication unit 110, the storage unit 120, the display unit 130, and the controller 140 are the same as those in FIGS. 1 to 6, further descriptions thereof will not be provided.

The receiver 150 may receive broadcast contents (or a broadcast signal). The broadcast contents may include an image, audio data and additional data (for example, electronic program guide (EPG), and the receiver 150 may receive broadcast contents from various sources such as terrestrial broadcasting, cable broadcasting, satellite broadcasting, Internet broadcasting, and etc.

For example, the receiver 150 may be configured to include a tuner (not shown), a demodulator (not shown), an equalizer (not shown), etc. to receive broadcast contents transmitted from a broadcasting station.

The signal processor 160 performs signal processing with respect to contents received through the receiver 150. Specifically, the signal processor 160 performs operations such as decoding, scaling, frame rate conversion, etc. with respect to images constituting contents so that they are in the form which can be output in the display unit 130. In addition, the signal processor 160 may perform signal processing such as decoding with respect to audio data which constitutes the contents, so that it is in the form which can be output in the audio output unit 190.

The remote control signal receiver 170 receives a remote control signal input from a remote controller (not shown).

For example, the remote control signal receiver 170 may receive a remote control signal to turn on the power of the display apparatus 100 or display menus. When a remote control signal to turn on the power of the display apparatus 100 or display menus is received, the controller 140 may display menus to execute basic programs. In this case, the controller 140 may configure menus differently according to a location of the display apparatus 100 and display the same.

In addition, the remote control signal receiver 170 may receive various remote control signals. For example, the remote control signal receiver 170 may receive a remote control signal to change channels or adjust volume, and the controller 140 may change channels or adjust volume of the display apparatus 100 according to the received remote control signal.

In addition, the remote control signal receiver 170 may receive a remote control signal to select various menu items included in a menu to execute basic programs. The controller 140 may provide basic functions by executing basic programs corresponding to the selected menu items. For example, when a remote control signal to select the function of searching contents is received, the controller 140 may control to execute a basic program for searching contents and display a contents search screen. In addition, when a remote control signal to search various application programs is received, the controller 140 may execute a basic program for searching various application programs and display a menu item to execute the various application programs installed in the display apparatus 100.

The input unit 180 receives various user commands. The controller 140 may execute a function corresponding to a user command input from the input unit 180.

For example, if a user command to turn on the power of the display apparatus 100 or a user command to display a menu is input through the input unit 180, the controller 140 may display a menu to execute basic programs. In this case, the controller 140 may configure and display menus differently according to a location of the display apparatus 100.

In addition, the input unit 180 may receive a user command to change channels or adjust volume, and the controller 140 may change channels or adjust values according to the input user command.

Further, the input unit 180 may receive a user command to select various menu items included in a menu to execute basic programs. The controller 140 may provide basic functions by executing a basic program corresponding to a menu item which is selected in accordance with the input user command.

To do so, the input unit 180 may be realized as an input panel. The input panel may consist of a touch pad, a key pad including various function keys, number keys, special keys, text keys, etc. or a touch screen.

The audio output unit 190 may convert an audio signal output from the signal processor 160 to sound and output the same to a connected external apparatus through a speaker (not shown) or an external output terminal (not shown).

An interface unit 195 connects various other apparatuses (not shown) to the display apparatus 100. In addition, the interface unit 195 may transmit contents pre-stored in the display apparatus 100 to other apparatuses (not shown) or receive contents from other apparatuses (not shown).

To do so, the interface unit 195 may include at least one of a High-Definition Multimedia Interface (HDMI) input terminal, a component input terminal, a PC input terminal, and a universal serial bus (USB) input terminal.

Meanwhile, the controller 140 may control the communication unit 110 to receive information regarding locations which are matched with each of the network addresses and information regarding a location of the display apparatus 100 from an outside source. For example, the controller 140 may request information regarding locations which are matched with each of the network addresses and receive the corresponding information from a server (not shown). In addition, the controller 140 may transmit a network address of the display apparatus 100 and receive information regarding a location of the display apparatus from a server (not shown).

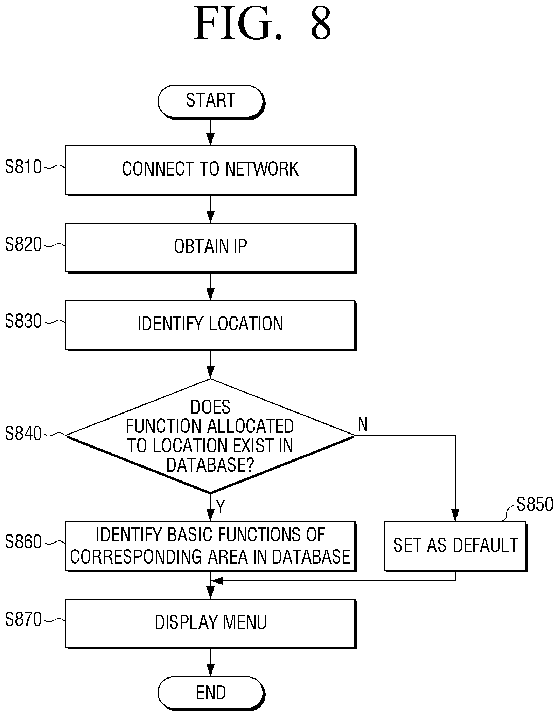

FIG. 8 is a flowchart provided to explain a method for displaying different menus according to a location of a display apparatus according to an exemplary embodiment. Since the method for displaying different menus to provide basic functions according to a location of the display apparatus 100 has been explained in detail with reference to FIGS. 1 to 7, only brief explanation on the method for displaying different menus according to a location of a display apparatus will be explained with reference to FIG. 8.

First of all, the display apparatus 100 is connected to a network (S810). Subsequently, the display apparatus 100 obtains an IP address which is used for network communication (S820).

The display apparatus 100 determines its location using the obtained IP address (S830). Specifically, the display apparatus 100 may store information regarding locations which are matched with each of the IP addresses, and determine a location of the display apparatus 100 using the same. Alternatively, the display apparatus 100 may receive information regarding locations which are matched with each of the IP addresses from an outside source and determine a location of the display apparatus 100 using the same. The display apparatus may also transmit an IP address to an outside destination and receive a location of the display apparatus 100 from the outside.

Subsequently, the display apparatus 100 determines whether a function allocated to the location of the display apparatus 100 exists in a database (S840). That is, the display apparatus 100 may pre-store information regarding basic functions which are provided according to a location of the display apparatus 100 and determine whether a function allocated to the location of the display apparatus 100 exists in the database using the same.

If it is determined that the function allocated to the location of the display apparatus 100 does not exist (S840-N), the display apparatus 100 identifies the basic functions that are set as the default functions (S850).

Meanwhile, if it is determined that the function allocated to the location of the display apparatus 100 exists (S840-Y), the display apparatus 100 identifies the basic functions of the corresponding region of the database (S860).

Subsequently, the display apparatus 100 displays menus (S870). Specifically, if there are basic functions allocated to the location of the display apparatus 100, the display apparatus 100 may display a menu to provide the corresponding basic functions, and if there are no basic functions allocated to the location, the display apparatus 100 may display a menu to provide basic functions that are set as default functions.

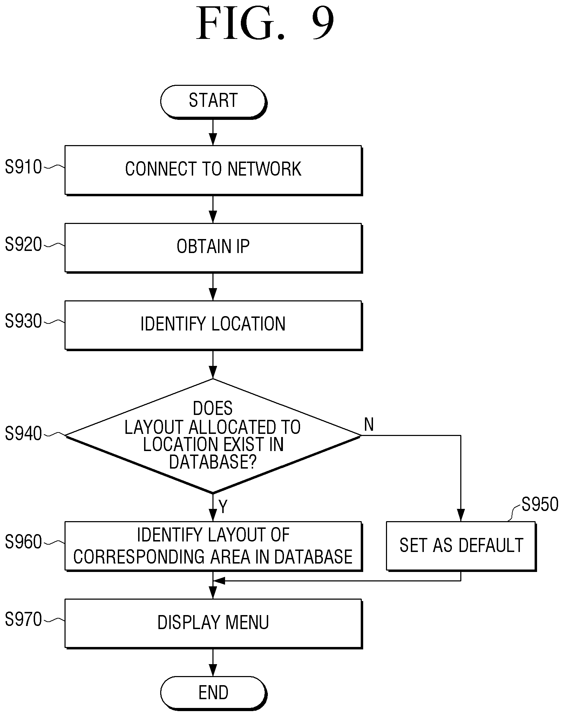

FIG. 9 is a flowchart provided to explain a method for displaying menus having different layouts according to a location of a display apparatus according to an exemplary embodiment. Since the method for displaying menus having different layouts according to a location of the display apparatus 100 has been explained in detail with reference to FIGS. 1 to 7, only a brief explanation of the method for displaying menus having different layouts according to a location of a display apparatus will be explained with reference to FIG. 9.

First of all, the display apparatus 100 is connected to a network (S910). Subsequently, the display apparatus 100 obtains an IP address which is used for network communication (S920).

The display apparatus 100 determines a location of the display apparatus 100 using the obtained IP address (S930). Specifically, the display apparatus 100 may store information regarding locations which are matched with each of the IP addresses, and determine a location of the display apparatus 100 using the same. Alternatively, the display apparatus 100 may receive information regarding locations which are matched with each of the IP addresses from an outside source and determine a location of the display apparatus 100 using the same. The display apparatus may also transmit an IP address to an outside destination and receive a location of the display apparatus 100 from an outside source.

Subsequently, the display apparatus 100 determines whether a layout allocated to a location of the display apparatus exists in database (S940). That is, the display apparatus 100 may pre-store information regarding layouts of menus which are provided according to a location of the display apparatus 100 and determine whether information regarding a layout of a menu which is allocated to a location of the display apparatus 100 exists in database using the same.

If it is determined that there is no menu allocated to the location of the display apparatus (S940-N), the display apparatus 100 identifies a layout of a menu which is set as the default (S950).

Meanwhile, if there is a menu allocated to the location of the display apparatus 100 (S940-Y), the display apparatus 100 identifies a layout of the corresponding region in the database (S960).

Subsequently, the display apparatus 100 displays menus (S970). Specifically, if there is a layout of a menu allocated to a location of the display apparatus 100, the display apparatus 100 may configure and display menus in accordance with the corresponding layout, and if there is no layout of a menu allocated to the location, the display apparatus 100 may configure and display menus in accordance with a layout which is set as the default.

Meanwhile, in the above exemplary embodiment, different menus to display basic functions according to a location of the display apparatus 100 are displayed, or layouts of menus are changed and displayed, but this is only an example.

In other words, the controller 140 may perform different functions with respect to the same event according to a location of the display apparatus 100.

Herein, the event may include various events which may occur in the display apparatus 100 such as an event of connecting another apparatus (not shown) to the display apparatus, an event of selecting a specific menu item in the display apparatus 100, and so on.

For example, when an event where another apparatus (not shown) is connected to the interface unit 195 occurs, different functions may be performed according to a location of the display apparatus 100. To do so, the storage unit 120 may store information regarding functions which are performed when an event occurs according to a location of the display apparatus 100.

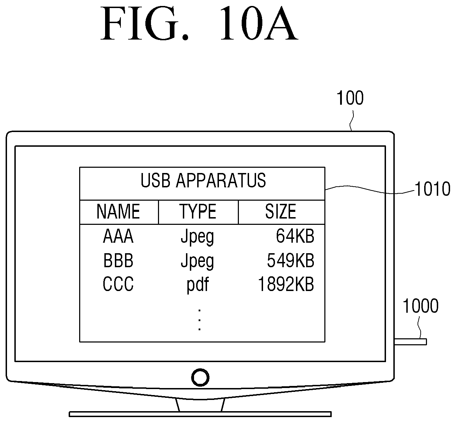

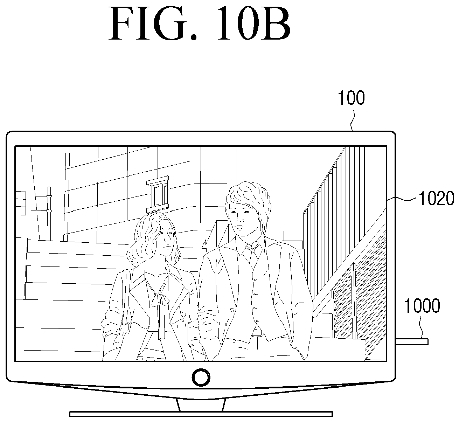

To be specific, when a USB apparatus 1000 is connected, the controller 140 may display a list 1010 of contents stored in the USB apparatus 1000 at a specific location as illustrated in FIG. 10A, while displaying a reproduction screen 1020 by automatically reproducing specific contents stored in the USB apparatus 100 at another location as illustrated in FIG. 10B. Herein, the type of contents which are reproduced automatically (such as, video, music, image, etc.) may be set or changed by a user.

Meanwhile, if the type of content files is different, for example, the extensions of files are different, whether to reproduce files may be set differently for respective extensions of the files according to a location of display apparatus 100. For example, if a content is an image, the controller 140 may control to reproduce a jpeg file while controlling not to reproduce a pdf file. To do so, the storage unit 120 may store information regarding extensions of files which are reproduced according to a location of the display apparatus 100.

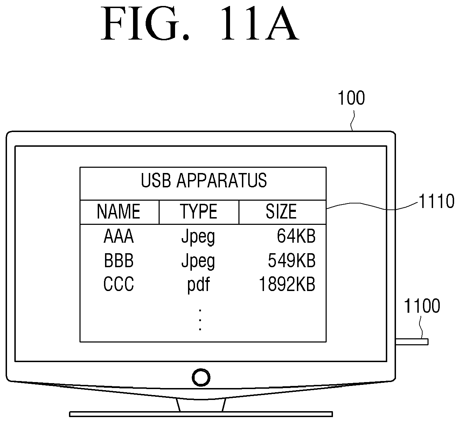

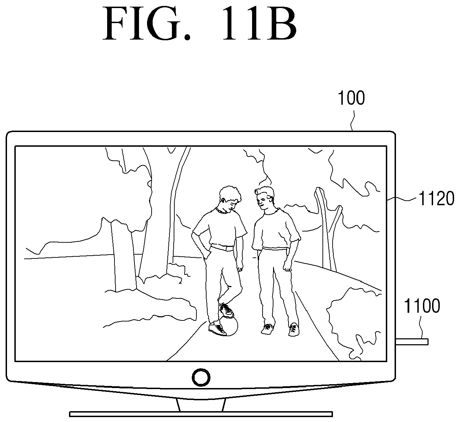

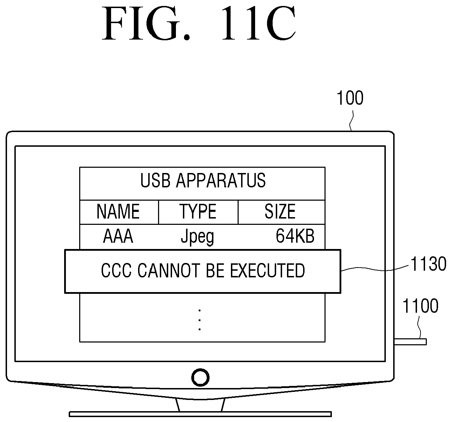

For example, if a USB apparatus 1100 is connected as illustrated in FIG. 11A, the controller 140 may display a list 1110 regarding images stored in the USB 1100. In this case, if the display apparatus 100 is located at a specific location and a jpeg file is selected on the list 1110 as illustrated in FIG. 11B, the controller 140 may display an image 1120 by reproducing the selected jpeg file, and if a pdf file is selected on the list 1110, the controller 140 may display a message 1130 indicating that the pdf file cannot be reproduced as illustrated in FIG. 11C.

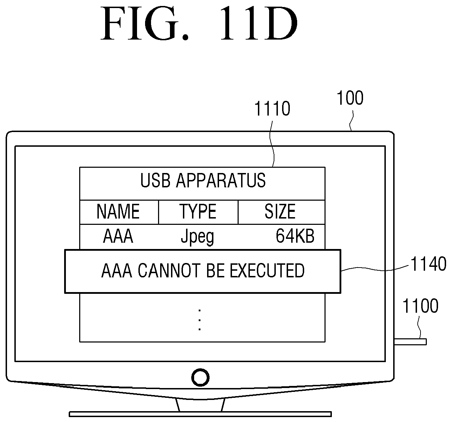

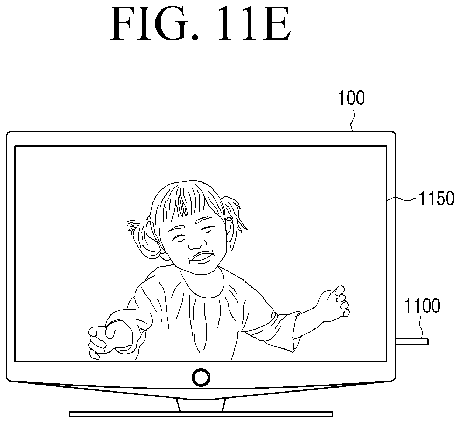

Alternatively, if the display apparatus 100 is located at a specific location and a jpeg file is selected on the list 1110 as illustrated in FIG. 11D, the controller 140 may display a message 1140 indicating that the selected jpeg file cannot be reproduced, and if a pdf file is selected on the list 1110 as illustrated in FIG. 11E, the controller 140 may display an image 1150 by reproducing the selected pdf file.

Meanwhile, the controller 140 may provide different specific functions according to a location of the display apparatus 100. Herein, the specific functions represent various functions which can be provided within the scope of basic functions. For example, if a basic function is a setting function, the specific functions may be the function of setting a resolution, the function of setting a screen ratio, the function of setting volume, and so on.

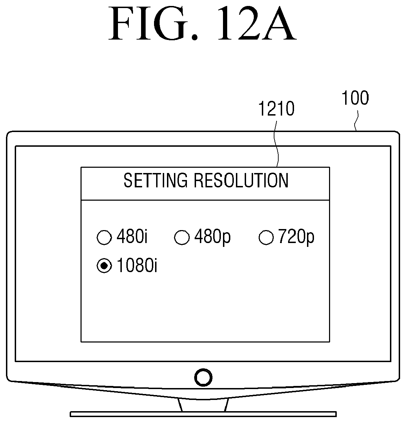

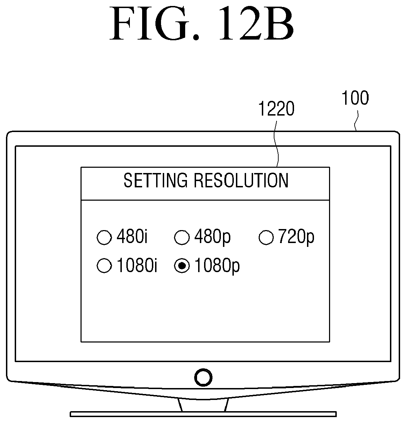

For example, as illustrated in FIGS. 12A and 12B, the controller 140 may provide a different interface and/or different options for setting a resolution according to a location of the display apparatus 100. Specifically, if the display apparatus 100 is located at a specific location, the controller 140 may display a UI 1210 where resolution can be set to 480i, 480p, 720p, or 1080i as illustrated in FIG. 12A, and if the display apparatus 100 is located at another location, the controller 140 may display a UI 1220 where resolution can be set to 480i, 480p, 720p, 1080i, or 1080p as illustrated in FIG. 12B.

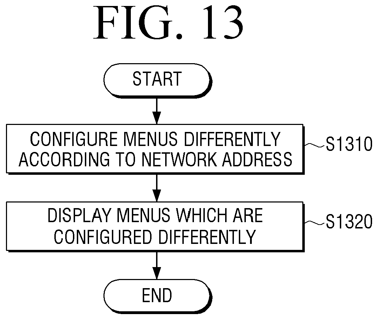

FIG. 13 is a flowchart provided to explain a menu displaying method according to an exemplary embodiment. In particular, FIG. 13 is a flowchart provided to explain a menu displaying method of a display apparatus which provides a menu to execute basic programs installed in the display apparatus.

First of all, menus are configured differently according to network addresses which are allocated to the display unit 100 for network communication or location information received through network communication (S1310).

Herein, the network addresses may be Internet Protocol (IP) addresses. In addition, the menus represent menus to execute basic programs installed in a display apparatus, and the basic programs may be application programs necessary to provide basic functions of the display apparatus.

To do so, the display apparatus may store information regarding menus which are displayed differently according to a location of the display apparatus.

Specifically, a location of the display apparatus may be determined using a network address, and menus corresponding to the location of the display apparatus may be configured using pre-stored information.

Subsequently, menus which are configured differently are displayed (S1320). Herein, the menus may include menu items to execute each of the basic programs corresponding to a location of the display apparatus from among basic programs pre-stored in the display apparatus.

Meanwhile, in the above exemplary embodiment, menus to provide different basic functions according to a location of the display apparatus are explained, but this is only an example. That is, menus having different layouts according to a location of the display apparatus may be displayed. In addition, different functions with respect to the same event may be performed according to a location of the display apparatus, or the same type of contents may be reproduced differently according to the type of files. Further, specific functions may be provided differently according to a location of the display apparatus.

A non-transitory computer readable medium storing a program for performing a menu displaying method sequentially according to an exemplary embodiment may be provided.

Herein, the non-transitory recordable medium refers to a medium which may store data semi-permanently rather than storing data for a short time such as a register, a cache, and a memory and may be readable by an apparatus. Specifically, the above-mentioned various applications or programs may be stored in a non-temporal recordable medium such as compact disc (CD), digital versatile disc (DVD), hard disk, Blu-ray disk, USB, memory card, and read-only memory (ROM) and provided therein.

Communication between each of the components of the display apparatus may be performed through a bus. In addition, each device may further comprise a processor such as a CPU which performs the above-described various steps, a microprocessor, and so on.

The foregoing embodiments and advantages are merely exemplary and are not to be construed as limiting the present invention. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

The invention might include, relate to, and/or be defined by, the following aspects:
1. A display apparatus (100), comprising:
   a communicator (110) which is configured to perform communication with a network;
   a storage means (120) which is configured to store a program that is executable in the display apparatus;
   a display unit (130) which is configured to display menus to execute the program; and
   a controller (140) which is configured to control the display unit to configure and display the menus differently according to one from among a network address which is allocated to the display apparatus for network communication and location information received through network communication.
2. The apparatus as claimed in aspect 1, wherein the program is an application program necessary to provide a function of the display apparatus.
3. The apparatus as claimed in aspect 1 or 2, wherein the storage means (120) stores information regarding the menus which are displayed according to a location of the display apparatus (130).
4. The apparatus as claimed in aspect 3, wherein the controller (140) controls to determine the location of the display apparatus (130) using the network address and display a menu corresponding to the determined location of the display apparatus using pre-stored information.
5. The apparatus as claimed in aspect 4, wherein the menu includes menu items to execute programs corresponding to the location of the display apparatus (130) from among programs pre-stored in the storage.
6. The apparatus as claimed in anyone of aspects 1 to 5, wherein the network address is an Internet Protocol (IP) address.
7. A menu displaying method in a display apparatus (130) which provides menus to execute a program installed in the display apparatus, the method comprising:
   configuring the menus differently (S1310) according to one from among a network address which is allocated to the display apparatus for network communication and location information received through network communication; and
   displaying (S1320) the menus which are configured differently.
8. The method as claimed in aspect 7, wherein the program is an application program necessary to provide a function of the display apparatus.
9. The method as claimed in aspect 7 or 8, wherein the display apparatus (130) stores information regarding menus which are displayed according to a location of the display apparatus.
10. The method as claimed in aspect 9, wherein the configuring comprises determining a location of the display apparatus using the network address and configuring the menus to correspond to the determined location of the display apparatus using pre-stored information.
11. The method as claimed in aspect 10, wherein at least one of the menus includes menu items to execute programs corresponding to the location of the display apparatus from among programs pre-stored in a storage.
12. The method as claimed in any one of aspects 7 to 11, wherein the network address is an Internet Protocol (IP) address.

## Claims

1. A display apparatus, comprising:
a communicator which is configured to perform communication over a network;
a storage which is configured to store a plurality of application programs that are executable in the display apparatus;
a display unit which is configured to display a menu including a plurality of menu items which are corresponding to the plurality of application programs and are used for executing the plurality of application programs;
a controller which is configured to determine whether to display a menu item corresponding to a predetermined program among the plurality of application programs according to location information of the display apparatus received through the network, and to control the display unit to display a menu including the menu item based on determining the menu item is to be displayed.

2. The apparatus as claimed in claim 1, wherein the storage stores information regarding the menu which is displayed according to the location information.

3. The apparatus as claimed in any one of claims 1 to 2, wherein the predetermined program corresponds to a function of the display apparatus, the function being executable according to the location information.

4. The apparatus as claimed in any one of claims 1 to 3, wherein the predetermined program cannot be deleted arbitrarily by a user of the display apparatus, and
wherein the predetermined program is an application program which is installed by a manufacturer when the display apparatus is manufactured for the first time.

5. A menu displaying method in a display apparatus which provides a menu including a plurality of menu items which are corresponding to a plurality of application programs and are used for executing the plurality of application programs, the method comprising:
determining whether to display a menu item corresponding to a predetermined program among the plurality of application programs according to location information of the display apparatus received through a network; and
displaying the menu including the menu item based on the determining the menu item is to be displayed.

6. The method as claimed in claim 5, wherein the display apparatus stores information regarding the menu item which is displayed according to the location information.

7. The method as claimed in any one of claims 5 to 6, wherein the predetermined program corresponds to a function of the display apparatus, the function being executable according to the location information.

8. The method as claimed in any one of claims 5 to 7, wherein the predetermined program cannot be deleted arbitrarily by a user of the display apparatus, and
wherein the predetermined program is an application program which is installed by a manufacturer when the display apparatus is manufactured for the first time.
